# EUROPEAN PATENT APPLICATION

(11) **EP 4 804 494 A1**
(43) Date of publication of application: **09.09.2026**
(21) Application number: 26160059.7
(22) Date of filing: 23.02.2026
(51) Int. Cl.: H04L 67/00

(54) **AN APPARATUS AND A METHOD FOR A SENSING MANAGEMENT ENTITY FOR A WIRELESS COMMUNICATION NETWORK**

(30) Priority: 06.03.2025 FI 20255191
(71) Applicant: Nokia Solutions and Networks Oy, 02610 Espoo (FI)
(72) Inventor: KOUSARIDAS, Apostolos, Munich (DE); DOLL, Mark, Stuttgart (DE); MANDELLI, Silvio, Ludwigsburg (DE)
(74) Representative: Nokia EPO representatives

(57) **Abstract**

An apparatus for a sensing management entity for a wireless communication network, the apparatus comprising at least one processor, and at least one memory storing instructions that, when executed by the at least one processor, cause the sensing management entity to: determine first information characterizing at least one of: a) a processing technique to be applied by at least one sensing entity to information associated with sensing, or b) a type of reporting to be used by the at least one sensing entity for reporting at least one aspect associated with the sensing, transmit the first information to the at least one sensing entity.

## Description

### Field of the Disclosure

Various example embodiments relate to an apparatus for a sensing management entity for a wireless communication network.

Further example embodiments relate to a method for a sensing management entity for a wireless communication network.

### Background

Communication systems such as, e.g., wireless communication networks may be used for wireless exchange of information between two or more entities, e.g., comprising one or more terminal devices, e.g., user equipment (UE), and one or more network devices such as, e.g., base stations.

In some conventional approaches, sensing may be used to detect and analyze environmental conditions based on reflected or transmitted signals. In wireless networks, sensing can support object detection, localization, and interference management by leveraging communication signals for measurements.

### Summary

Various example embodiments of the disclosure are set out by the independent claims. The example embodiments and features, if any, described in this specification, that do not fall under the scope of the independent claims, are to be interpreted as examples useful for understanding various example embodiments of the disclosure.

Some examples relate to an apparatus for a sensing management entity for a wireless communication network according to claim 1.

In some examples, the wireless communication network may adhere to and/or may be based on some accepted (and/or planned) specification, e.g., standard, such as, e.g., 3G, 4G, 5G, 6G, or some other wireless communication standard. In some examples, this may also apply to at least one of: a) the sensing management entity, or b) the at least one sensing entity.

In some examples, the at least one sensing entity may be at least one of: a) a network device, e.g., base station, e.g., gNB, or b) a terminal device, e.g., user equipment, or c) any other device for the wireless communication network capable of performing sensing.

In some examples, the sensing management entity may be a network device or may be associated with a network device of the wireless communication system.

In some examples, the at least one aspect associated with the sensing comprises at least one of: a) at least a part of the information associated with the sensing, or b) information obtained by applying the processing technique to the information associated with the sensing.

In some examples, the first information characterizes at least one of: a) information indicating at least one of the following reporting types: a1) object map, or a2) point cloud, or a3) periodogram, or a4) any combination of at least two of the aforementioned aspects a1), a2), a3, a4), or b) information indicating a clutter removal scheme, or c) information indicating objects to be excluded, or d) information indicating at least one beam identifier for which at least one of d1) the processing technique or d2) the type of reporting is to be applied, or e) information indicating a compression configuration to be used for compressing information, or f) information indicating to merge sensing data (e.g., based on the reporting type). In some examples, the compression configuration may, e.g., indicate at least one of: a) a lossy compression, or b) a lossless compression.

In some examples, the first information characterizes at least one of: a) information indicating a configuration for data reduction (e.g., at least one of a1) cropping, or a2) decimation), or b) identification information characterizing at least one of: b1) an identifier of a sensing session, or b2) an identifier of a radio access network, or b3) an identifier of a sensing entity, for example user equipment identifier or cell identifier, or b4) an identifier of a beam, or b5) an identifier of a transmission and/or reception point, TRP, or c) information indicating an angular space configuration associated with the type of reporting, or d) information indicating a timing configuration associated with the type of reporting.

In some examples, the instructions, when executed by the at least one processor, cause the sensing management entity to: transmit at least a part of the first information to at least one further entity, e.g., a sensing processing entity or function. This way, in some examples, the sensing processing entity may be notified on at least some aspects of the first information, thus, e.g., enabling an efficient processing of sensing-related information as may, e.g., be obtained by the sensing processing entity from the at least one sensing entity.

In some examples, the instructions, when executed by the at least one processor, cause the sensing management entity to: receive a response to the first information (e.g., from the at least one sensing entity), the response comprising at least one of: a) an indication whether a configuration based on the first information has been successful or not, or b) an indication indicating a cause, for example, in case of no successful configuration.

In some examples, the means for determining the first information and for transmitting the first information may, e.g., comprise at least one processor, and at least one memory storing instructions that, when executed by the at least one processor, cause the apparatus to perform at least one of the aforementioned aspects of determining and transmitting the first information.

In some examples, the means may, e.g., comprise circuitry configured to perform at least one of the aforementioned aspects of determining and transmitting the first information.

Some examples relate to a sensing management entity for a wireless communication network, comprising at least one apparatus according to the disclosure.

Some examples relate to a method for a sensing management entity for a wireless communication network, the method comprising: determining first information characterizing at least one of: a) a processing technique to be applied by at least one sensing entity to information associated with sensing, or b) a type of reporting to be used by the at least one sensing entity for reporting at least one aspect associated with the sensing, transmitting the first information to the at least one sensing entity.

Some examples relate to an apparatus for a sensing entity for a wireless communication network according to claim 7.

In some examples, the at least one aspect associated with the sensing comprises at least one of: a) at least a part of the information associated with the sensing, or b) information obtained by applying the processing technique to the information associated with the sensing.

In some examples, as mentioned above, the first information characterizes at least one of: a) information indicating at least one of the following reporting types: a1) object map, or a2) point cloud, or a3) periodogram, or a4) any combination of at least two of the aforementioned aspects a1), a2), a3, a4), or b) information indicating a clutter removal scheme, or c) information indicating objects to be excluded, or d) information indicating at least one beam identifier for which at least one of d1) the processing technique or d2) the type of reporting is to be applied, or e) information indicating a compression configuration to be used for compressing information, or f) information indicating to merge sensing data.

In some examples, as also mentioned above, the first information characterizes at least one of: a) information indicating a configuration for data reduction, or b) identification information characterizing at least one of: b1) an identifier of a sensing session, or b2) an identifier of a radio access network, or b3) an identifier of a sensing entity, for example user equipment identifier or cell identifier, or b4) an identifier of a beam, or b5) an identifier of a transmission and/or reception point, TRP, or c) information indicating an angular space configuration associated with the type of reporting, or d) information indicating a timing configuration associated with the type of reporting.

In some examples, the instructions, when executed by the at least one processor, cause the sensing entity to perform at least one of: a) configuring a sensing receiver procedure based on the first information, or b) transmitting a response to the first information (e.g., to a sensing management entity, e.g., according to the disclosure), the response comprising at least one of: a) an indication whether a configuration based on the first information has been successful or not, or b) an indication indicating a cause, for example, in case of no successful configuration.

In some examples, the instructions, when executed by the at least one processor, cause the sensing entity to perform at least one of: a) receiving at least one sensing signal, or b) processing at least one sensing signal based on the first information, or c) preparing at least one sensing data report based on at least one of c1) the processing, or c2) the first information, or d) transmitting (e.g., via control plane, e.g., NG-AP, or via user plane signaling, or via management plane signaling) the at least one sensing data report to at least one further entity.

In some examples, the received at least one sensing signal may have been transmitted by at least one of: a) the sensing entity itself, or b) at least one further entity. This way, in some examples, at least one of mono-static sensing or bi-static sensing may be enabled.

In some examples, the means for receiving the first information may, e.g., comprise at least one processor, and at least one memory storing instructions that, when executed by the at least one processor, cause the apparatus to perform at least the aforementioned aspect of receiving the first information.

In some examples, the means may, e.g., comprise circuitry configured to perform at least the aforementioned aspect of receiving the first information.

Some examples relate to a method for a sensing entity for a wireless communication network according to claim 14.

Some examples relate to an apparatus for a sensing processing entity for a wireless communication network, the apparatus comprising at least one processor, and at least one memory storing instructions that, when executed by the at least one processor, cause the sensing processing entity to perform at least one of: A) receiving at least a part of first information characterizing at least one of: a) a processing technique to be applied by at least one sensing entity to information associated with sensing, or b) a type of reporting to be used by the at least one sensing entity for reporting at least one aspect associated with the sensing, or B) receiving at least one sensing data report from at least one sensing entity, or C) processing the at least one received sensing data report.

Some examples relate to an apparatus for a sensing processing entity for a wireless communication network, comprising means for performing at least one of: A) receiving at least a part of first information characterizing at least one of: a) a processing technique to be applied by at least one sensing entity to information associated with sensing, or b) a type of reporting to be used by the at least one sensing entity for reporting at least one aspect associated with the sensing, or B) receiving at least one sensing data report from at least one sensing entity, or C) processing the at least one received sensing data report.

In some examples, the means for performing at least one of the aforementioned aspects A) receiving at least a part of first information, or B) receiving at least one sensing data report from at least one sensing entity, or C) processing the at least one received sensing data report may, e.g., comprise at least one processor, and at least one memory storing instructions that, when executed by the at least one processor, cause the apparatus to perform at least one of the aforementioned aspects A), or B), or C).

In some examples, the means may, e.g., comprise circuitry configured to perform at least one of the aforementioned aspects A), or B), or C).

Some examples relate to a method for a sensing processing entity for a wireless communication network, the method comprising performing at least one of: A) receiving at least a part of first information characterizing at least one of: a) a processing technique to be applied by at least one sensing entity to information associated with sensing, or b) a type of reporting to be used by the at least one sensing entity for reporting at least one aspect associated with the sensing, or B) receiving at least one sensing data report from at least one sensing entity, or C) processing the at least one received sensing data report.

Some examples relate to a computer program comprising instructions which, when executed by an apparatus, cause the apparatus to perform the method according to the disclosure.

Some examples relate to a computer readable storage medium, for example a non-transitory storage medium, comprising the computer program according to the disclosure.

Some examples relate to a, for example computer-implemented, data structure, which may comprise at least one information element, e.g., of the first information, according to the disclosure.

Some examples relate to a data carrier signal carrying and/or characterizing at least one of a) the computer program according to the disclosure or b) the data structure according to the disclosure.

### Brief Description of the Figures

- Fig. 1A: depicts a simplified block diagram,
- Fig. 1B: depicts a simplified block diagram,
- Fig. 2: depicts a simplified block diagram,
- Fig. 3: depicts a simplified flow-chart,
- Fig. 4: depicts a simplified block diagram,
- Fig. 5: depicts a simplified flow-chart,
- Fig. 6A: depicts a simplified flow-chart,
- Fig. 6B: depicts a simplified flow-chart,
- Fig. 7: depicts a simplified flow-chart,
- Fig. 8: depicts a simplified signaling diagram,
- Fig. 9: depicts a simplified block diagram.

### Description of some Example Embodiments

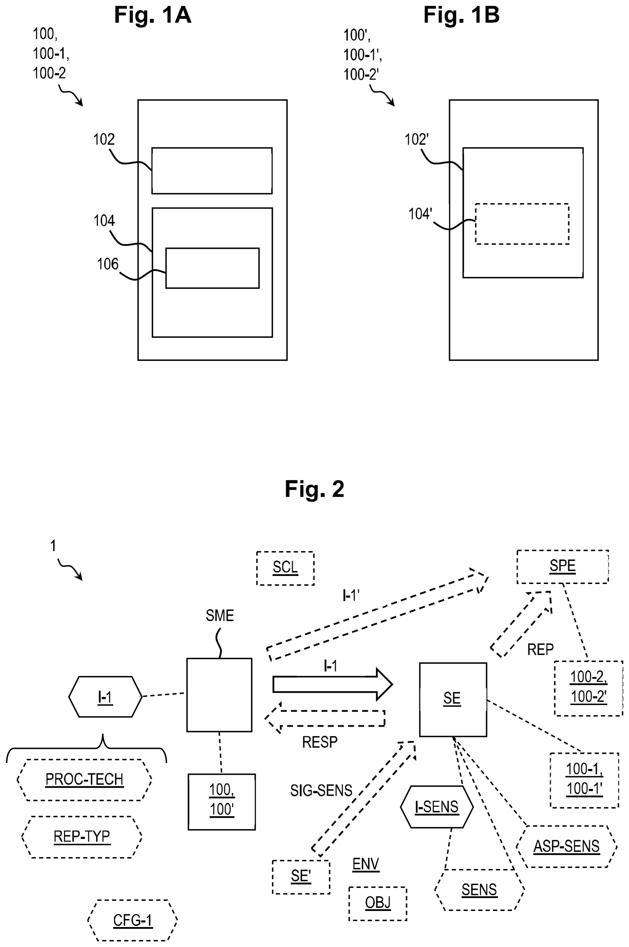

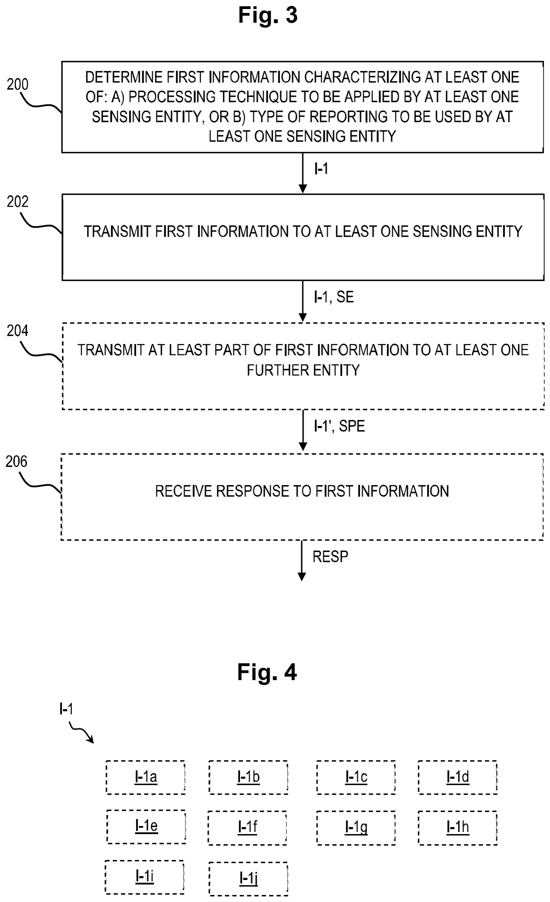

Some examples, see, for example, Fig. 1A, 2, 3, relate to an apparatus 100 for a sensing management entity SME for a wireless communication network 1, the apparatus 100 comprising at least one processor 102, and at least one memory 104 storing instructions 106 that, when executed by the at least one processor 102, cause the sensing management entity SME to: determine 200 (Fig. 3) first information I-1 characterizing at least one of: a) a processing technique PROC-TECH to be applied by at least one sensing entity SE (Fig. 2) to information I-SENS associated with sensing SENS (e.g., information obtained by the sensing SENS), or b) a type REP-TYP of reporting to be used by the at least one sensing entity SE for reporting REP at least one aspect ASP-SENS associated with the sensing SENS (e.g., to at least one further entity SPE, e.g., a sensing processing entity or function SPE), transmit 202 (Fig. 3) the first information I-1 to the at least one sensing entity SE. In some examples, this may enable to control at least one of a) processing, or b) reporting related to the sensing SENS, e.g., as performed by the at least one sensing entity SE.

In some examples, the first information I-1 may be transmitted to the at least one sensing entity SE in the form of or as a request for configuring a sensing receiver, e.g., of the at least one sensing entity SE, e.g., as a "Sensing Receiver Configuration Request".

In some examples, Fig. 2, the wireless communication network 1 may adhere to and/or may be based on some accepted (and/or planned) specification, e.g., standard, such as, e.g., 3G, 4G, 5G, 6G, or some other wireless communication standard. In some examples, this may also apply to at least one of: a) the sensing management entity SME, or b) the at least one sensing entity SE.

In some examples, Fig. 2, the at least one sensing entity SE may be at least one of: a) a network device, e.g., base station, e.g., gNB, or b) a terminal device, e.g., user equipment, or c) any other device for the wireless communication network 1 capable of performing sensing SENS.

In some examples, Fig. 2, the sensing management entity SME may be a network device or may be associated with a network device of the wireless communication system 1. In some other examples, however, at least a part of the functionality of the sensing management entity SME may be implemented in a terminal device.

In some examples, Fig. 2, the at least one aspect ASP-SENS associated with the sensing SENS comprises at least one of: a) at least a part of the information I-SENS associated with the sensing, or b) information obtained by applying the processing technique PROC-TECH to the information I-SENS associated with the sensing.

In some examples, Fig. 2, 3, 4, the first information I-1 characterizes at least one of: a) information I-1a indicating at least one of the following reporting types: a1) object map, or a2) point cloud, or a3) periodogram, or a4) any combination of at least two of the aforementioned aspects a1), a2), a3, a4), or b) information I-1b indicating a clutter removal scheme, or c) information I-1c indicating objects to be excluded, or d) information I-1d indicating at least one beam identifier for which at least one of d1) the processing technique PROC-TECH or d2) the type REP-TYP of reporting is to be applied, or e) information I-1e indicating a compression configuration to be used for compressing information, e.g., sensing information I-SENS or information obtained by processing the sensing information I-SENS, or f) information I-1f indicating to merge sensing data (e.g., based on the reporting type REP-TYP). In some examples, the compression configuration may, e.g., indicate at least one of: a) a lossy compression, or b) a lossless compression.

In some examples, Fig. 2, 3, 4, the first information I-1 characterizes at least one of: a) information I-1g indicating a configuration CFG-1 for data reduction (e.g., at least one of a1) cropping, or a2) decimation), or b) identification information I-1h characterizing at least one of: b1) an identifier of a sensing session, or b2) an identifier of a radio access network, or b3) an identifier of a sensing entity SE, for example user equipment identifier or cell identifier, or b4) an identifier of a beam, or b5) an identifier of a transmission and/or reception point, TRP, or c) information I-1i indicating an angular space configuration associated with the type of REP-TYP reporting, or d) information I-1j indicating a timing configuration associated with the type REP-TYP of reporting.

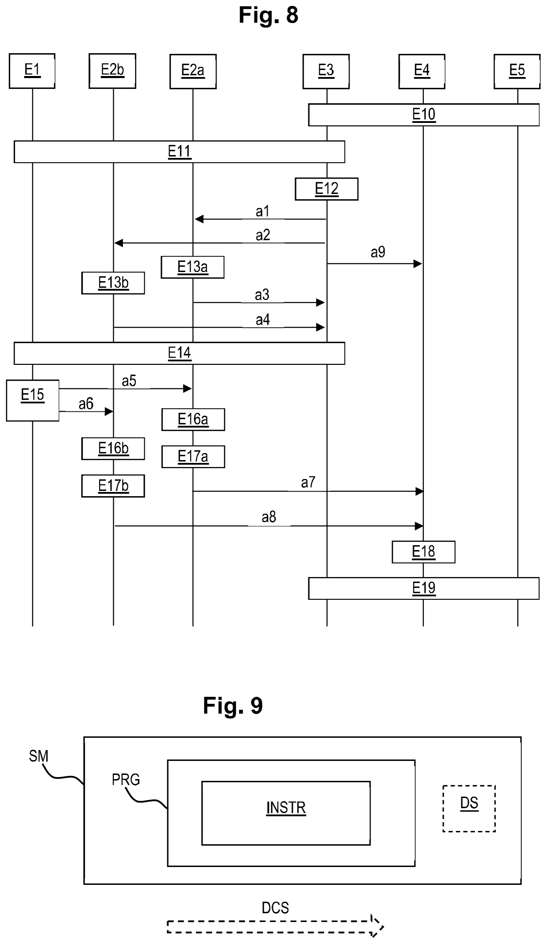

In some examples, at least one, for example computer-implemented, information element IE, e.g., data structure DS (see Fig. 9), may be provided, which may comprise at least one of the elements I-1a, ..., I-1j as depicted by Fig. 4.

In some examples, Fig. 3, the instructions 106, when executed by the at least one processor 102, cause the sensing management entity SME to: transmit 204 at least a part I-1' of the first information I-1 to at least one further entity, e.g., a sensing processing entity or function SPE. This way, in some examples, the sensing processing entity SPE may be notified on at least some aspects of the first information I-1, thus, e.g., enabling an efficient processing of sensing-related information as may, e.g., be obtained by the sensing processing entity SPE from the at least one sensing entity SE.

In some examples, Fig. 3, the instructions 106, when executed by the at least one processor 102, cause the sensing management entity SME to: receive 206 a response RESP to the first information I-1 (e.g., from the at least one sensing entity SE), the response RESP comprising at least one of: a) an indication whether a configuration based on the first information I-1 has been successful or not, or b) an indication indicating a cause, for example, in case of no successful configuration.

Some examples, Fig. 1B, relate to an apparatus 100' for a sensing management entity SME for a wireless communication network 1, the apparatus 100' comprising means 102' for: determining 200 first information I-1 characterizing at least one of: a) a processing technique to be applied by at least one sensing entity to information associated with sensing, or b) a type of reporting to be used by the at least one sensing entity for reporting at least one aspect associated with the sensing, transmitting 202 the first information I-1 to the at least one sensing entity SE.

In some examples, Fig. 1B, the means 102' for determining 200 the first information I-1 and for transmitting 202 the first information I-1 may, e.g., comprise at least one processor 102 (see, for example, element 102 of Fig. 1A), and at least one memory 104 storing instructions 106 that, when executed by the at least one processor 102, cause the apparatus 100' to perform at least one of the aforementioned aspects of determining 200 and transmitting 202 the first information I-1.

In some examples, Fig. 1B, the means 102' may, e.g., comprise circuitry 104' configured to perform at least one of the aforementioned aspects of determining 200 and transmitting 202 the first information I-1.

Some examples, Fig. 2, relate to a sensing management entity SME for a wireless communication network 1, comprising at least one apparatus 100, 100' according to the disclosure.

Some examples, Fig. 3, relate to a method for a sensing management entity SME for a wireless communication network 1, the method comprising: determining 200 first information I-1 characterizing at least one of: a) a processing technique to be applied by at least one sensing entity to information associated with sensing, or b) a type of reporting to be used by the at least one sensing entity for reporting at least one aspect associated with the sensing, transmitting 202 the first information I-1 to the at least one sensing entity SE.

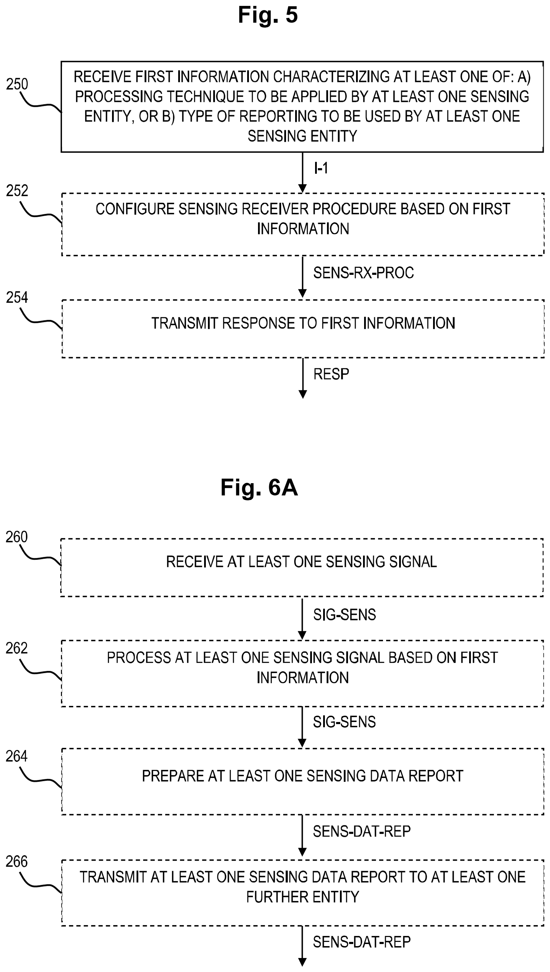

Some examples, see, for example, Fig. 1A, 2, 5, relate to an apparatus 100-1 for a sensing entity SE for a wireless communication network 1, the apparatus 100-1 comprising at least one processor 102, and at least one memory 104 storing instructions 106 that, when executed by the at least one processor 100-1, cause the sensing entity SE to: receive 250 (Fig. 5), e.g., from a sensing management entity SME, e.g., according to the disclosure, first information I-1 characterizing at least one of: a) a processing technique PROC-TECH to be applied by the sensing entity SE to information I-SENS associated with (e.g., as obtained by the) sensing SENS, or b) a type REP-TYP of reporting to be used by the sensing entity SE for reporting at least one aspect associated with the sensing, e.g., to at least one further entity, e.g., a sensing processing entity or function SPE.

As mentioned above, in some examples, Fig. 2, the at least one aspect ASP-SENS associated with the sensing comprises at least one of: a) at least a part of the information associated with the sensing, or b) information obtained by applying the processing technique to the information associated with the sensing.

In some examples, as mentioned above, the first information I-1 characterizes at least one of the elements I-1a, I-1b, ..., I-1j explained above with respect to Fig. 4.

In some examples, Fig. 5, the instructions 106, when executed by the at least one processor 102, cause the sensing entity SE to perform at least one of: a) configuring 252 a sensing receiver procedure SENS-RX-PROC based on the first information I-1, or b) transmitting 254 a response RESP to the first information I-1 (e.g., to a or the sensing management entity SME, e.g., according to the disclosure), the response RESP comprising at least one of: a) an indication whether a configuration based on the first information has been successful or not, or b) an indication indicating a cause, for example, in case of no successful configuration.

In some examples, Fig. 6A, the instructions 106, when executed by the at least one processor 102, cause the sensing entity SE (Fig. 2) to perform at least one of: a) receiving 260 at least one sensing signal SIG-SENS, or b) processing 262 at least one, e.g., received, sensing signal SIG-SENS based on the first information I-1, or c) preparing 264 at least one sensing data report SENS-DAT-REP based on at least one of c1) the processing 262, or c2) the first information I-1, or d) transmitting 266 (e.g., via control plane, e.g., NG-AP, or via user plane signaling) the at least one sensing data report SENS-DAT-REP to at least one further entity, e.g., the sensing processing entity SPE, also see the block arrow REP of Fig. 2.

In some examples, Fig. 2, the received at least one sensing signal SIG-SENS may have been transmitted by at least one of: a) the sensing entity SE itself, or b) at least one further entity SE'. This way, in some examples, at least one of mono-static sensing or bi-static sensing may be enabled.

Some examples, see, for example, Fig. 1B, 2, 5, relate to an apparatus 100-1' for a sensing entity SE for a wireless communication network 1, the apparatus 100-1' comprising means 102' for: receiving 250 first information I-1 characterizing at least one of: a) a processing technique to be applied by the sensing entity to information associated with sensing, or b) a type of reporting to be used by the sensing entity for reporting at least one aspect associated with the sensing.

In some examples, Fig. 1B, the means 102' for receiving the first information may, e.g., comprise at least one processor 102 (see, for example, Fig. 1A), and at least one memory 104 storing instructions 106 that, when executed by the at least one processor 102, cause the apparatus 100-1' to perform at least the aforementioned aspect of receiving 250 the first information I-1.

In some examples, Fig. 1B, the means 104' may, e.g., comprise circuitry 104' configured to perform at least the aforementioned aspect of receiving 250 the first information I-1.

Some examples, Fig. 5, relate to a method for a sensing entity SE for a wireless communication network 1, comprising: receiving 250 first information I-1 characterizing at least one of: a) a processing technique PROC-TECH to be applied by the sensing entity SE to information I-SENS associated with sensing SENS, or b) a type REP-TYP of reporting to be used by the sensing entity SE for reporting at least one aspect associated with the sensing.

Some examples, see, for example, Fig. 1A, 2, 7, relate to an apparatus 100-2 for a sensing processing entity SPE for a wireless communication network 1, the apparatus 100-2 comprising at least one processor 102, and at least one memory 104 storing instructions 106 that, when executed by the at least one processor 102, cause the sensing processing entity SPE to perform at least one of: A) receiving 280 at least a part I-1' of first information I-1 characterizing at least one of: a) a processing technique PROC-TECH to be applied by at least one sensing entity SE to information associated with sensing, or b) a type REP-TYP of reporting to be used by the at least one sensing entity SE for reporting at least one aspect associated with the sensing, or B) receiving 282 at least one sensing data report SENS-DAT-REP from at least one sensing entity SE, or C) processing 284 the at least one received sensing data report SENS-DAT-REP.

In some examples, Fig, 7, the processing 284 may at least partly be based on the received part I-1' of the first information I-1.

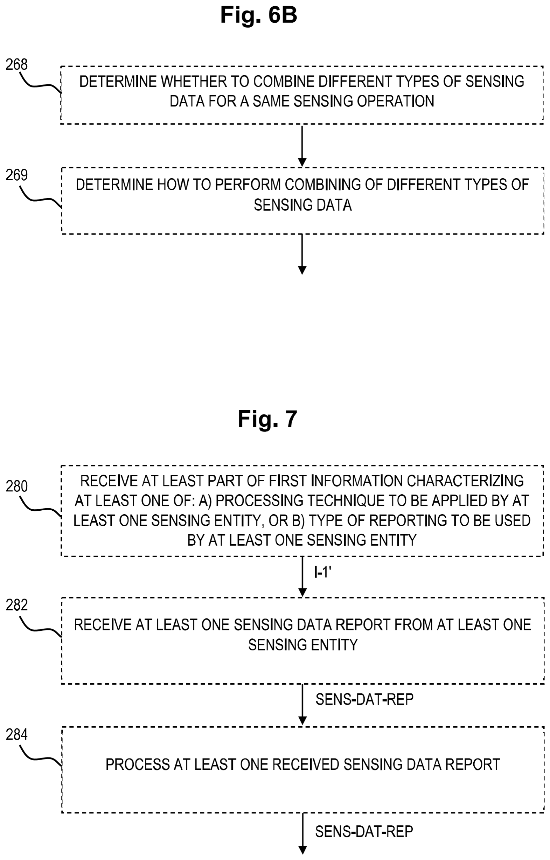

In some examples, Fig. 7, the processing 284 may comprise at least one of: a) jointly processing at least two sensing data reports, e.g., as obtained by one or more sensing entities SE, SE' (Fig. 2), or b) combining at least two sensing data reports, or c) merging at least two sensing data reports.

Some examples, see, for example, Fig. 1B, 2, 7, relate to an apparatus 100-2' for a sensing processing entity SPE for a wireless communication network 1, comprising means 102' for performing at least one of: A) receiving 280 at least a part I-1' of first information characterizing at least one of: a) a processing technique to be applied by at least one sensing entity to information associated with sensing, or b) a type of reporting to be used by the at least one sensing entity for reporting at least one aspect associated with the sensing, or B) receiving 282 at least one sensing data report SENS-DAT-REP from at least one sensing entity SE, or C) processing 284 the at least one received sensing data report SENS-DAT-REP.

In some examples, Fig. 1B, the means 102' for performing at least one of the aforementioned aspects A) receiving 280 at least a part of first information, or B) receiving 282 at least one sensing data report from at least one sensing entity, or C) processing 284 the at least one received sensing data report may, e.g., comprise at least one processor 102 (see, for example, Fig. 1A), and at least one memory 104 storing instructions 106 that, when executed by the at least one processor 102, cause the apparatus 100-2' to perform at least one of the aforementioned aspects A) receiving 280, or B) receiving 282, or C) processing 284.

In some examples, Fig. 1B, the means 102' may, e.g., comprise circuitry 104' configured to perform at least one of the aforementioned aspects A) receiving 280, or B) receiving 282, or C) processing 284.

Some examples, Fig. 7, relate to a method for a sensing processing entity SPE (Fig. 2) for a wireless communication network 1, the method comprising performing at least one of: A) receiving 280 at least a part I-1' of first information I-1 characterizing at least one of: a) a processing technique to be applied by at least one sensing entity to information associated with sensing, or b) a type of reporting to be used by the at least one sensing entity for reporting at least one aspect associated with the sensing, or B) receiving 282 at least one sensing data report SENS-DAT-REP from at least one sensing entity, or C) processing 284 the at least one received sensing data report SENS-DAT-REP.

In the following, further aspects and examples are disclosed, which, in some examples, may be combined with at least one of the aspects and/or examples disclosed above.

In some examples, the principle of the disclosure may be used to provide and/or manage a sensing service, e.g., to obtain awareness of a scene surrounding at least one sensing device or entity SE, SE' (Fig. 2), which, in some examples, includes at least one of: a) a capability to detect, localize, and track objects, or b) a capability to form images, or c) a capability to extract one or more features, e.g., for recognition/classification purposes, etc.

In some examples, the principle of the disclosure may be used for an integration of sensing and communication, e.g., integrated sensing and communication (ISAC).

In some examples, the principle of the disclosure may be used for at least one of: a) intrusion detection (e.g., intruder detection in smart homes, pedestrian/animal intrusion detection on highways), or b) supporting autonomous driving (e.g., sensing assisted automotive maneuvering and navigation, sensing for parking space determination, etc.), or c) supporting unmanned, e.g., uncrewed, aerial vehicle (UAV) Flight (e.g., UAV flight trajectory tracing, network assisted sensing to avoid UAV collision), or d) supporting automated guided vehicle (AGV) and/or autonomous mobile robots (AMR), e.g., in factories (e.g., AGV detection and tracking in factories, AMR collision avoidance in smart factories), or e) environment/weather monitoring (e.g., rain, pollution, flooding), or f) health monitoring (e.g., fall detection, contactless sleep monitoring service, health monitoring at home), or g) extended reality (XR).

In some examples, the principle of the disclosure may be used to provide a sensing management functionality (e.g., "SeMF"), e.g., via the apparatus 100, 100' or the sensing management entity SME, respectively. In some examples, the sensing management functionality may be configured, e.g., responsible, to perform at least one of: a) receiving one or more sensing requests (e.g., having same or different types), e.g., from a sensing client SCL (Fig. 2) (e.g., a UE or Application Function (AF) or Network Exposure Function (NEF)), or b) configuring and/or coordinating sensing functions, or c) collecting sensing measurement (e.g., sensing data), or d) providing sensing data and/or sensing outputs, e.g., to the sensing client SCL, e.g., either directly or via a NEF, e.g., if a requesting client SCL is a third party, e.g., external, application or AF. In some examples, the sensing management functionality or sensing management entity SME, respectively, may, e.g., receive requests that include information about at least one of: a) a type of a sensing area, or b) a quality of service, QoS, associated with the sensing SENS, or c) objects, e.g., UE, that should be sensed.

In some examples, the principle of the disclosure may be used for and/or with different methods and/or types for sensing SENS that may be used in an integrated sensing and communication system 1.

In some examples, radio access network (RAN) nodes such as base stations, e.g., gNB, and/or UE may participate in a sensing procedure either for mono-static sensing or for bi-static sensing.

In some examples, in mono-static RAN-based sensing, a base station may act as a transmitter (e.g., "sounder"), e.g., to transmit at least one sensing signal SIG-SENS (Fig. 2), and the same base station may act as a receiver, e.g., sensor, e.g., receiving the sensing signal or at least a reflected and/or scattered portion of the sensing signal. In some examples, the base station may employ a system in which the transmit and receive arrays are placed together.

In some examples, in bi-static RAN-based sensing, a base station may act as a transmitter, e.g., "sounder", e.g., to transmit one or more sensing signals SENS-SIG, and one or more other sensing entities, e.g., base stations, may act as one or more receiver(s), e.g., sensor(s), e.g., receiving the one or more sensing signals.

In some examples, in bi-static RAN and UE-based sensing, a RAN device, e.g., base station, may transmit at least one sensing signal and at least one UE may receive the at least one sensing signal, e.g., to obtain sensing data. In some examples, it is also possible that one or more UE transmit at least one sensing signal, and that at least one RAN device, e.g., base station, receives the at least one sensing signal, e.g., to obtain sensing data.

In some examples, it is also possible that one or more UE at least temporarily operate as transmitter(s) of at least one sensing signal, wherein at least one or more, e.g., same or different, UE, may at least temporarily operate as receivers for the at least one sensing signal.

In some examples, the principle of the disclosure is applicable to any of the aforementioned types of sensing.

In some examples, Fig. 2, information I-SENS associated with the sensing SENS, e.g., sensing measurement information or "sensing measurement(s)" or "sensing data", may include data derived from radio signals (e.g., 3GPP, non-3GPP, WiFi, radar, Lidars, etc.) impacted (e.g. reflected and/or refracted and/or diffracted) by an object OBJ or environment ENV of interest for sensing purposes, and may optionally be processed (e.g., within an example 5G/6G system 1, using at least one of a) an external server, or b) an application server, or c) an edge server, etc.) or, generally, a sensing processing function, SePF, or a corresponding entity SPE. In some examples, based on the information I-SENS, sensing output information or data may be provided, which, e.g., includes processed sensing data as, e.g., requested by a service consumer, e.g., the sensing client SCL.

In some examples, a sensing transmitter's primary task may be to transmit sensing signals, e.g., sensing signals that are sufficiently dense and broad in frequency and time, e.g., to enable a sensing receiver to fulfill one or more predetermined QoS parameters. In some examples, Fig. 2, at least one of the sensing entities SE, SE' may comprise at least one sensing transmitter (not shown).

In some examples, Fig. 2, in an ISAC-capable system such as the wireless communication network 1 according to some examples, one or more regular communication signals (e.g., reference signals and data channels) may be used, e.g., reused, as sensing signals SIG-SENS (Fig. 2), wherein these transmitted signals may be known to (or may be estimated by) at least one sensing receiver (not shown) as, e.g., comprised within at least one of the sensing entities SE, SE'.

In some examples, Fig. 2, a sensing transmitter may be provided with at least one transmit sensing signal configuration. In some examples, e.g., if a sensing transmitter and a sensing receiver differ, a sensing signal configuration may be provided to the sensing receiver, as well as information useful to recreate, e.g., reconstruct, the sensing signal at the sensing receiver. In some examples, this may allow the sensing receiver to be able to determine channel state information (e.g., "CSI") and - based on the CSI - to estimate one or more physical properties of the environment ENV.

In some examples, Fig. 2, a sensing receiver may process a received sensing signal SIG-SENS, e.g., to extract relevant sensing information, e.g., based on acquired channel state information (CSI). As mentioned above, in some examples, a sensing receiver may be provided for or within one or more UE and/or base stations, e.g., depending on the sensing mode. In some examples, there may be different options for processing information I-SENS associated with the sensing, e.g., at the receivers (e.g., UE or base stations), e.g., based on at least one of: a) a type of a sensing request, or b) one or more conditions where the sensing SENS is taking place, or c) capabilities of the sensing entity SE, SE'. In some examples, a processing and consequently reporting of the sensing data may be important for a fulfillment of the sensing QoS and/or for maintaining a non-excessive demand on an interface between a sensing receiver and a function receiving sensing reports.

In some examples, the principle of the disclosure may be used to determine at least one of: a) an appropriate processing to be applied on received sensing signals, or b) a configuration for the reporting REP (Fig. 2) of sensing data, e.g., from at least one sensing entity SE, SE' such as, e.g., a UE and/or a base station, e.g., to at least one entity SPE provided for processing, e.g., calculation, of sensing outputs, or c) determining how to reduce processing and/or communication resources requirements at a receiver side (e.g., UE and base station) for the processing and reporting, respectively.

In some examples, the principle of the disclosure may be used to provide methods and related signaling to configure sensing receivers, e.g., receivers of at least one sensing entity SE, SE', e.g., at one or more UE and/or base stations, e.g., of an integrated sensing and communication (ISAC) system 1, e.g., to process (received) sensing signals, e.g., to achieve one or more target sensing goals, and/or to enable a selection (e.g., based on at least one of priorities or results) and/or combination (e.g., of multiple different reporting types) and/or compression of sensing measurements, optionally including related sensing reporting information.

In some examples, Fig. 2, the sensing management function or sensing management entity SME, respectively, may be envisioned to configure signal transmission and reception of different entities, e.g., to satisfy a desired sensing QoS. In some examples, it is proposed that, based on at least one of a) one or more target sensing QoS requirements, or b) sensing device capabilities (e.g., of at least one UE or base station) the sensing management entity SME determines at least one of: i) a processing that should be made, e.g., by each involved sensing entity SE, SE', that receives sensing signals SIG-SENS, e.g., of a specific sensing session, or ii) a type of a measurement report, e.g., from the sensing entity SE, SE' to at least one further entity such as, e.g., the sensing processing function of sensing processing entity SPE.

In some examples, the sensing management entity SME may select a sensing reporting type REP-TYP (Fig. 2) from at least one of: a) an object map, or b) a target point cloud, or c) one or more periodograms, or d) a combination of any of the aspects a), b), c).

In some examples, the sensing management entity SME may determine, e.g., based at least on the selected sensing reporting type REP-TYP, a processing configuration of at least one, e.g., of each, sensing entity SE, SE' that may receive the sensing signals SIG-SENS, wherein the processing configuration may include at least one of the following elements: a) an angular space and/or timing configuration, or b) a configuration for at least one of b1) cropping or b2) decimation (e.g., undersampling), e.g., in at least one of range or speed of at least one of the object map, or the target point cloud, or at least one excerpt of a periodogram, e.g., associated with an (unambiguous) value range related to range and speed that is to be covered by the processing and/or reporting, and optionally, a respective quantization of one or more of the respective values, or c) a compression configuration, or d) merging data indication indicating to merge predetermined data.

In some examples, Fig. 2, the sensing management entity SME may transmit the first information I-1 according to the disclosure, which characterize at least one of the aforementioned aspects PROC-TECH, REP-TYP, to at least one sensing entity SE, SE', e.g. in the form of a configuration request, e.g., indicating which sensing reporting type REP-TYO is desired and a respective configuration with which sensing entity SE, SE', e.g., its sensing receiver, can process, e.g., the sensing channel state information.

In some examples, Fig. 2, a sensing entity SE, SE', e.g., its sensing receiver, may apply a received processing configuration to measured sensing channel state information, e.g., according to, e.g., based on at least one of a) the received processing configuration (e.g., in form of the first information I-1, also see reference sign PROC-TECH) from the sensing management entity SME, or b) the reporting type(s) REP-TYP.

In some examples, Fig. 2, the sensing entity SE, SE' may decide whether there is a need to combine different types of sensing data, e.g., for a same sensing operation, and/or how such combination may be done, thus, in some examples, constructing a composite reporting type.

In some examples, Fig. 6B, the sensing entity SE, SE' may be configured to perform at least one of: a) determining 268 whether to combine different types of sensing data for a same sensing operation, or b) determining 269 how to perform combining of different types of sensing data.

In some examples, the sensing entity SE, SE' may determine whether to combine different types of sensing data for a same sensing operation based on at least one of the following elements: a) location specific criteria/parameters, or b) quality thresholds of processed sensing data e.g., estimated confidence level for the detection of one or more objects, per target/point or in a periodogram measurement values and associated confidence, or c) at least one further criterion that may, e.g., be provided to the sensing entity, e.g., by at least one further entity.

In some examples, a combination of different types of sensing data may be triggered based on one or more, e.g., different, criteria that may be provided to the sensing entity SE, SE', e.g., by the sensing management entity SME, e.g., using the first information I-1, wherein the criteria may comprise at least one of: a) location specific criteria and/or parameters, or b) quality thresholds of the processed sensing data e.g., characterizing an estimated confidence level for the detection of one or more objects, e.g., per target/point, or, in a periodogram, measurement values and associated confidence.

In some examples, e.g., alternatively, to the sensing entity SE, SE' deciding on the combination, the sensing management entity SME may decide whether to combine different types of sensing data and may, e.g., assist on the required combinations of the reporting types, e.g., for a specific sensing operation.

In some examples, Fig. 2, the sensing management entity SME may dynamically update any of the processing configurations at the sensing entity SE, SE', e.g., based on at least one of: a) feedback provided by the sensing entity SE, SE' (see, for example, block 206 of Fig. 3), or b) a quality of a sensing operation.

In some examples, at least one sensing entity SE, SE' may provide to the sensing processing entity SPE, e.g., together with sensing data measurements, the processing configuration, e.g., in the form of at least a part I-1' of the first information I-1 (also see block 280 of Fig. 7), which in some examples may be useful for the sensing processing entity SPE, e.g., to effectively merge and/or combine and/or jointly process sensing data, e.g., from different sensing entities SE, SE'.

In some examples, at least some of the aspects of the method according to the disclosure may be applied with network involvement, e.g., support by at least one network device, e.g., for a case of UE-based sensing, wherein a role of the sensing management function, e.g., at least a part of a functionality of the sensing management entity SME, is at least temporarily realized by at least one UE, which is, for example, involved in UE-based sensing operations. In other words, in some examples, the functionality of at least one of the elements 100, 100', SME may also be integrated in a UE.

In the following, further aspects and examples of the principle of the disclosure are explained with reference to the example signaling diagram of Fig. 8.

Element E1 symbolizes a sensing transmitter configured to transmit one or more sensing signals SIG-SENS (Fig. 2), as may, e.g., be implemented in a UE or in a base station or any other ISAC-capable device. In some examples, the sensing transmitter E1 may form part of a sensing entity SE (Fig.2). Element E2a symbolizes a first sensing entity or sensing receiver, respectively, configured to receive one or more sensing signals SIG-SENS. In some examples, the first sensing receiver E2a may, e.g., be implemented in a base station. Element E2b symbolizes a second sensing entity or sensing receiver, respectively, configured to receive one or more sensing signals SIG-SENS. In some examples, the second sensing receiver E2b, may, e.g., be implemented in a UE.

Element E3 of Fig. 8 symbolizes a sensing management function (SeMF) or sensing management entity, respectively, also see element SME of Fig. 2. Element E4 of Fig. 8 symbolizes a sensing processing function (SePF) or entity, respectively, also see element SPE of Fig. 2. Element E5 of Fig. 8 symbolizes a sensing client, e.g., an application function (AF), also see element SCL of Fig. 2.

Element E10 of Fig. 8 symbolizes aspects related to a sensing service request according to some examples. In some examples, the sensing client, e.g., application function E5 may send a sensing service request, e.g., to the 5G Core Network, 5GC. In some examples, the sensing service request may include information that are related with at least one of: a) a sensing service type, or b) a sensing area, or c) a sensing configuration and/or filters information, or d) sensing QoS requirements etc.

Element E11 symbolizes the SeMF E3 using one or more inputs of the sensing client E5 (e.g., from the sensing service request, see element E10) as well as in-network information to identify the sensing entities, e.g., RAN nodes, E1, E2a, E2b that should be involved in the sensing process and determines the configuration of the sensing procedure and/or an allocation of sensing resources, e.g., resources that may be used for the sensing.

Element E12 symbolizes the SeMF E3 determining, e.g., defining, based on a type of the sensing service and the involved sensing entities that are receiving sensing data, a processing that should be applied at the one or more sensing entities, e.g., receiving entities, E2a, E2b receiving the sensing signals of the specific sensing session, as well as a type of reporting from the receiver(s) E2a, E2b towards the Sensing Processing Function E4. In some examples, the so determined information may be characterized by at least one of the elements PROC-TECH, REP-TYP (Fig. 2) forming part of the first information I-1 according to the disclosure.

In some examples, the SeMF E3 may select a sensing reporting type REP-TYP, e.g., at least one of: objects map, target point cloud, periodogram reporting, or a combination of these reporting types.

In some examples, the SeMF E3 may determine a clutter removal scheme (which in some examples may, e.g., be used before a periodogram calculation), as well as one or more targets and/or objects that may, e.g., be excluded (e.g., after a periodogram calculation), thus, e.g., eliminating known clutter.

In some examples, the SeMF E3 may indicate, e.g., within the first information, if any of the aspects related to element E11 as explained above can be applied for one or more beam IDs.

In some examples, the SeMF E3 may determine a, for example lossy, compression configuration (e.g., if applicable), e.g., based on the reporting type REP-TYP.

As an example for a compression configuration related to a target point cloud, in some examples, multiple targets that are close together, i.e., comprise similar range and speed, may be represented as a single cluster, e.g., via their mean position and overall extent in range, speed and power, and possibly further information about their distribution within the cluster like variance or quantiles.

Although a clustered set of scattering points also known as targets may likely stem from a single physical object OBJ (Fig. 2) like a car, pedestrian, tree, wall, etc., in some examples, the clustering may be provided, e.g., solely, for a purpose of compression, which, in some examples, means that no assertion is made by the clustering that the clustered targets actually belong to a single physical object.

As an example for a compression configuration related to a periodogram, in some examples, a block scaling compression may be applied to (e.g., equally sized) range-speed tiles of the periodogram, e.g., fully covering the whole periodogram.

As an example for a compression configuration related to an object map, in some examples, detected objects may be clustered to a single object, e.g., in case a set of detected objects are following a known pattern, for instance, in terms of their relative location, speed and other object features (e.g., several wagons/coaches detected as individual objects on the map could be grouped/clustered as a train object). In some examples, the SeMF E3 may provide the above-mentioned pattern, which can, e.g., be used by the sensing receiver to compare with the detected objects.

In some examples, the SeMF E3 may determine if a merging of sensing data is to be performed, e.g. required, e.g., at a specific receiver based on the selected reporting type REP-TYP.

The arrows a1, a2 of Fig. 8 symbolize the SeMF E3 transmitting to the sensing entities E2a, E2b a Sensing Receiver Configuration Request, e.g., at least similar to the first information I-1, which, in some examples may include at least one of: a) a Sensing Session identifier, ID, or b) a RAN ID, or c) a UE ID, or d) a Cell ID, or e) a Beam ID, or f) a transmission and/or reception point, TRP, ID, or g) a reporting type REP-TYP, e.g., characterizing at least one of an object map, or a target point cloud, or a periodogram, or h) an angular space configuration of the selected reporting type REP-TYP, or i) a timing configuration of the selected reporting type REP-TYP, or j) a configuration for a cropping and/or decimation (e.g., undersampling) in range and speed of the object map and/or target point cloud and/or periodogram excerpts, i.e., an (unambiguous) value range in range and speed that is to be covered and the respective quantization of values, or k) a compression configuration, e.g., according to the selected reporting type REP-TYP, or I) a merging data indication.

In some examples, at least one Sensing Receiver Configuration Request a1, a2 may be associated with, e.g., bound to, a specific transmitting entity E1 and a corresponding transmitted sensing signal SIG-SENS, e.g., a corresponding TRP ID and its PRS Resource (set) ID, or any general info on a resource element, RE, map and the symbols transmitted.

In some examples, a configuration for at least one sensing receiver E2a, E2b may, e.g., be different based on different sensing signal transmitters E1. In other words, in some examples, different Sensing Receiver Configuration Requests may be provided, e.g., used, for different sources transmit sensing signals.

Elements E13a, E13b of Fig. 8 symbolize the sensing entities E2a, E2b receiving the Sensing Receiver Configuration Requests a1, a2. In some examples, the sensing entities E2a, E2b may validate the received Sensing Receiver Configuration Requests a1, a2 and may configure a sensing receiver procedure based on the received Sensing Receiver Configuration Requests a1, a2, e.g., for received sensing signals that correspond to a specific sensing session ID.

Arrows a3, a4 of Fig. 8 symbolize the sensing entities E2a, E2b transmitting, e.g., to the SeMF E3, an indication whether the configuration, e.g., based on the received Sensing Receiver Configuration Requests a1, a2, has been successful or not (see, for example, the response RESP of block 254 of Fig. 5), and, in some examples, if the configuration has not been successful, a reason and/or cause can be described, e.g., within the indication, e.g., response a3, a4.

In some examples, at least one of the following causes may be used for the responses a3, a4:
- for a sensing transmitter (which is the same as the receiver in case of mono-static sensing): a) Insufficient radio resources, e.g., no UE to serve in a direction required for sensing SENS, so extra radio resources (e.g., full slots with analogue beamforming) would need to be spent, or b) EMF limit reached (e.g., time averaged transmit power into desired sensing direction has reached what regulation allows or would surpass with request sensing transmissions).
- for a sensing receiver: a) Insufficient radio and/or processing resources, e.g., current uplink downlink split has a too large uplink part such that there are not enough downlink radio resources to achieve the requested sensing QoS, and/or not enough processing power left for sensing (uplink communication processing is much more computationally complex than downlink), or b) insufficient backhaul capacity, e.g., not enough capacity reservable on the backhaul PON upstream to report periodograms as requested, or c) No coverage, e.g. requested sensing direction is (temporarily) blocked by an object (may also apply to a sensing transmitter), or backscatter from a near-by object is too strong to achieve required sensitivity in the requested direction (automatic gain control adapts to strongest signal and analogue-digital converter's dynamic range is insufficient to detect expected sensing signal level as quantization noise will be greater than the to be sensed signal).

Element E14 of Fig. 8 symbolizes an initiation of a sensing operation according to the defined sensing configuration, e.g., based on the first information I-1, e.g., as received within the requests a1, a2. In some examples, as, e.g., already mentioned above, a transmitter E1 of sensing signals can be a base station or a UE, and in some examples, any sensing method (e.g., mono-static or bi-static or multi-static) may be used.

Element E15 of Fig. 8 symbolizes the sensing transmitter E1 transmitting at least one sensing signal SIG-SENS (also see Fig. 2), which may be received by the sensing entities or receivers E2a, E2b, see the arrows a5, a6.

Elements E16a, E16b of Fig. 8 symbolize the sensing receivers E2a, E2b processing the received sensing signal SIG-SENS according to the received information, e.g., configuration parameters, see, for example elements E13a, E13b.

In some examples, e.g., for periodogram information to be reported to the Sensing Processing Function E4, the sensing receivers E2a, E2b may construct two-dimensional (2D) range-speed periodograms and may report them a) one by one, e.g., as they are constructed from each individual sensing burst, or b) may collect multiple such periodograms and may combine them, e.g., stack them in b1) angular space (e.g., beams) and/or b2) time (i.e., multiple sensing bursts per beam). In some examples, the sensing receivers E2a, E2b may crop and/or decimate the periodogram(s) to the requested value range and/or undersampling rate, thus, e.g., only, reporting every n-th sample, e.g., in range and radial speed (e.g., and beam and time). In some examples, the sensing receivers E2a, E2b may may compress samples of the periodogram(s).

In some examples, e.g., for target point clouds, the sensing receivers E2a, E2b may report not every periodogram sample but only therein detected targets, i.e., maxima in the periodogram found with at least one chosen detector algorithm and a respective parametrization, e.g., according to the received configuration (as, e.g., indicated by the first information I-1), e.g., individually and/or as clusters, e.g., to further reduce an amount of sensing data. Thus, in other words, in some examples, the sensing entity E2a, E2b may detect at least one target within at least one periodogram and may report the detected at least one target.

In some examples, for object maps, a target point detection and/or a filtering may be carried out, e.g., additionally, e.g., over time and/or space, e.g., using periodograms of multiple sensing bursts on one or more beams. In some examples, at least one of the following aspects may be configured, e.g., using the first information I-1, and/or may be used as configured, e.g., for the aforementioned target point detection and/or the filtering: a) a Kalman filter, or b) information about a line of sight space, or c) grouping of objects, or d) filtering according to objects classes, or e) cropping a map of objects in space to a requested sensing area.

Elements E17a, E17b of Fig. 8 symbolize the sensing receivers E2a, E2b preparing results of the processing E16a, E16b, e.g., the sensing measurements (see also element SENS-DAT-REP of Fig. 6), to be transmitted to the at least one further entity, e.g., SePF E4, including at least one of the following: a) an object map (e.g., as described in "Aspect 1" further below), or b) a point cloud (e.g., as described in "Aspect 2" further below), or c) a periodogram (e.g., as described in "Aspect 3" further below).

In some examples, a selection of one or more reporting types REP-TYP may, e.g., be based on possible resource constraints according to priorities given, e.g., by the SeMF E3 (also see "Aspect 4" further below).

In some examples, e.g., according to processing outputs and defined thresholds, a combination of any of the above explained sensing reporting types REP-TYP may be composed, as further detailed in "Aspect 5" provided further below.

In some examples, the sensing measurements may include confidentiality information, e.g., for any of the abovementioned parameters and/or measures.

In some examples, the sensing measurements may include information on a configuration of the processing at the receiver side (e.g., at the sensing entities E2a, E2b), e.g., according to the selected sensing data reporting type(s) REP-TYP, which may, e.g., be useful for a processing of the data at the SePF E4. In some examples, e.g., alternatively, or in combination, some of the processing configuration information may be provided from the SeMF E3 to the SePF E4.

The arrows a7, a8 of Fig. 8 symbolize the sensing entities E2a, E2b transmitting the sensing measurements, e.g., in the form of, e.g., derived, sensing data report(s), also see element SENS-DAT-REP of Fig. 6, to the SePF E4.

In some examples, the sensing data reporting a7, a8 to the SePF E4 may, e.g., be realized via at least one of a) control plane (e.g., NG-AP) signaling, or b) user plane signaling, or c) management plane signaling (e.g., in case the SePF E4 is located in an Operations, Administration and Maintenance (OAM) domain).

Element E18 of Fig. 8 symbolizes the SePF E4 receiving, e.g., collecting all provided sensing data reports SENS-DAT-REP, a7, a8 collected from different sensing entities E2a, E2b and processing, e.g., assessing, them, e.g., to determine one or more sensing outputs that may, e.g., be provided to the sensing client E5.

In some examples, the processing E18 by the SePF E4 may, e.g., depend on a reporting type REP-TYP and/or format of the sensing information as reported by the sensing entities E2a, E2b.

Arrow a9 of Fig. 8 symbolizes the SeMF E3 transmitting at least a part of the information (e.g., at least the part I-1' of the first information I-1) as transmitted via the Sensing Receiver Configuration Requests a1, a2 to the sensing entities E2a, E2b to the SePF E4. In some examples, the SePF E4 may use the so obtained information for the processing E18.

In some examples, at least one of the aspects 16a, 16b, 17a, 17b, a7, a8 may be repeated.

In some examples, the SeMF E3 may modify, e.g., update the configuration(s) for the sensing entities E2a, E2b, e.g., by transmitting updated Sensing Receiver Configuration Requests (not shown).

Element E19 of Fig. 8 symbolizes providing a sensing service response to the sensing client, e.g., the application function, E5, e.g., based on the sensing outputs as derived by the SePF E4 based on the sensing data reporting a7, a8.

In the following, further aspects and examples are provided for illustrating further aspects of the principle according to the disclosure, wherein, in some examples, one or more of these further aspects may be combined with each other and/or with any of the aspects or examples explained above.

In the following, an example "Aspect 1" is described, which relates to a UE/base station sensing receiver configuration for point cloud determination according to some examples.

In a points list (e.g., represented by a point cloud, wherein the points of the point cloud are organized in the form of a list), each point may represent one or more channel paths. In some examples, in the Sensing Receiver Configuration Request, see, for example, the arrows a1, a2 of Fig. 8 (or generally, the transmission 202 of the first information I-1, e.g., according to block 202 of Fig. 3), one or more of the following configuration parameters may be introduced, e.g., used, e.g., to enable a respective processing and/or behaviour at the sensing entity SE, SE' (Fig. 2), E2a, E2b (Fig. 8), e.g., to extract a relevant point cloud (e.g., defined as a list of points detected, in some examples each with an associated set of information, like range, angle, doppler, speed, power and/or complex coefficient, etc...) according to, e.g., based on the Sensing Receiver Configuration Request a1, a2 (Fig. 8), e.g., from measured and/or acquired channel state information. In some examples, the one or more configuration parameters may comprise at least one of: a) a maximum number of reported paths and/or points (hereafter, collectively denoted by "paths"), or b) a minimum range distance, or c) a minimum angle distance (e.g., both azimuth and elevation), or d) a minimum physical position distance, or e) a minimum speed distance, e.g., between the reported paths.

In some examples, a point may be reported only if its range difference between the other points is greater than a range distance or if its angular difference between the other points is greater than the angle distance or if its physical position difference between the other points is greater than the physical position distance or if its speed difference between the other points is greater than the speed distance. In some examples, the Range and/or angle and/or speed distance may have a default value, e.g., 0, e.g., if they are not communicated, e.g., within the first information I-1.In some examples, this may allow configuring and/or reporting multiple paths that are similar in different domains (e.g., angle and range) into a unique path, thus, e.g., compressing a reporting size.

In some examples, a probability of false alarm, e.g., associated with information about an object OBJ (Fig. 2) to be detected (e.g., the probability of false alarm depends on it), may be processed e.g., considering at least one of the following: a) a radar cross section (or a list of received power/amplitude per range), or b) at least one dimension, or c) an object type.

In some examples, a measurement type may be configured, e.g., to report either a) complex coefficients, or b) absolute power values.

In some examples, a threshold value for a minimum amplitude or power, e.g., compared to a maximum point amplitude or power, may be configured. In some examples, points with an amplitude or a power below the threshold value may not be reported.

In some examples, at least one of a required prominence or an isolation may be configured and/or considered, e.g., for point reporting. In some examples, the isolation denotes a distance to a next point with a same amplitude or power, e.g., of a comparatively strong peak main lobe. In some examples, the prominence may denote a difference from the point to the next key column to which it is to be descended at least to be able to reach a stronger point.

In some examples, e.g., in the measurement reporting (see the arrows a7, a8 of Fig. 8), a signaling based on NR Positioning Protocol A (NRPPa) may be used, e.g., possibly increasing a number of paths that may be reported and/or allowing for complex and/or absolute values to be reported with a channel path. Thus, in some examples, a conventional NRPPa signaling scheme may, e.g., be extended to enable measurement reporting according to the principle of the disclosure.

In the following, an example "Aspect 2" is described, which relates to a UE/base station sensing receiver configuration for periodogram determination according to some examples.

In some examples, an advantage of a periodogram may be the availability of a comparatively large amount of information, e.g., without a need for signaling, e.g., only, a strongest paths/points. In some examples, periodograms (i.e., characterizing a CSI range, speed and/or spatial tensor) may provide a grid of values in the range, Doppler (or speed) and/or angular domain may be determined, e.g., processed and provided by at least one sensing entity SE, SE', E2a, E2b. In some examples, one or more of the following aspects may be used to reduce a reporting message size for reporting information associated with at least one periodogram.

In some examples, for the first information I-1, e.g., in the form of the Sensing Receiver Configuration Request (see, for example, arrows a1, a2 of Fig. 8 or generally the transmitting block 202 of Fig. 3) one or more of the following configuration parameters may be provided, e.g., used, e.g., to enable to control a respective processing and/or behaviour of the sensing entities SE, SE' (Fig. 2), E2a, E2b, e.g., to extract relevant periodogram information based on a respective Sensing Receiver Configuration Request, e.g., from measured and/or acquired channel state information: a) a range domain characterization comprising at least one of a1) an aperture, e.g., minimum and maximum reported value, or a2) a sampling interval, e.g., between reported values, or b) an azimuth domain characterization comprising at least one of b1) an aperture, e.g., minimum and maximum reported value, or b2) a sampling interval, e.g., between reported values, or c) an elevation domain characterization comprising at least one of c1) an aperture, e.g., minimum and maximum reported value, or c2) a sampling interval, e.g., between reported values, or d) a speed domain characterization comprising at least one of d1) an aperture, e.g., minimum and maximum reported value, or d2) a sampling interval, e.g., between reported values, or e) a measurement type, e.g., indicating to report either e1) complex coefficients or e2) absolute power values, or f) a probability of a false alarm, e.g., associating with it at least some information about an object to be detected (e.g., the probability of false alarm depends on it), e.g., at least one of the following: f1) a radar cross section (or a list of received power/amplitude per range), or f2) dimensions, or f3) an object type, or g) a threshold value for a minimum amplitude and/or power, e.g., compared to a maximum point amplitude and/or power. Thus, in some examples, points with an amplitude and/or power below the threshold value may be reported.

In some examples, e.g., with a presence of one or more - for example N many - domains, an N-dimensional tensor and/or grid may be prepared, e.g., by the at least one sensing entity SE, SE', E2a, E2b. In some examples, domains, of which one or more may be mapped to the N many dimensions, may comprise at least one of: a) distance/range, or b) Doppler/speed, or c) azimuth, or d) zenith/elevation, or e) time. In some examples, each point in the tensor or grid may represent a measure in that point and may, e.g., be reported, e.g., if it passed one or more checks related to at least one of: a) a probability of false alarm, or b) a threshold for minimum amplitude, or c) any other configured threshold. Moreover, e.g., in case some measurements are not available, e.g., in certain regions of the N-dimensional grid (e.g., due to limited angular scanning), points associated with these unavailable measurements may also be omitted from reporting.

In some examples, points in the N-dimensional grid may be sorted, e.g., using at least one predetermined criterion (e.g., the "C-like order" where the last dimension index changes faster), thus, e.g., allowing to report only an amplitude or power associated to the point.

In some examples, if at least one point is omitted/skipped from reporting, a bitmap may be provided that may indicate the at least one skipped point.

In some examples, if one or more consecutive points of the grid are to be omitted/skipped, a bitmap may be provided which may indicate how many consecutive points are skipped (e.g., bitmap + 8- or 16-bit integer, e.g., to signal how many consecutive points are skipped).

In the following, an example "Aspect 3" is described, which relates to a UE/base station sensing receiver configuration for object map determination according to some examples.

In some examples, when determining at least one object map, more high-level information about performed measures may be discovered by the sensing receivers (as compared to, e.g., periodogram determination), e.g., already indicating at least some of the target characteristics of the objects. In some examples, in the Sensing Receiver Configuration Request, see, for example, the arrows a1, a2 of Fig. 8 (or generally, the transmission 202 of the first information I-1, e.g., according to block 202 of Fig. 3) one or more of the following configuration parameters may be provided, e.g., used, e.g., to enable a respective processing and/or behaviour of the at least one sensing entity SE, SE' (Fig. 2), E2a, E2b (Fig. 8), e.g., to extract a map of objects, e.g., according to, e.g., based on, the Sensing Receiver Configuration Request (see, for example, the arrows a1, a2 of Fig. 8 or generally, the received first information I-1), e.g., from the measured and/or acquired channel state information.

In some examples, one or more object types to be reported may be specified, e.g., within the first information I-1, e.g., the Sensing Receiver Configuration Request, e.g., allowing to report only objects of a certain type, comprising, e.g., at least one of: a) car, or b) bike, or c) vehicle, or d) drone, or e) pedestrian, of g) building, etc. In some examples, the object type may be indicated by a pre-configured identifier or by a defined object signature (e.g., Radar cross-section (RCS) of the object).

In some examples, information about one or more object shapes to be reported may be specified, e.g., within the first information I-1, e.g., the Sensing Receiver Configuration Request, such as, e.g., at least one of a minimum and/or maximum value of at least one of a) width, or b) height, or c) depth, or d) volume.

In some examples, information about a desired accuracy (e.g., individually per each domain range, azimuth, elevation, and velocity, or in 3D space) to be reported may be specified, e.g., within the first information I-1, e.g., the Sensing Receiver Configuration Request.

In some examples, one or more configuration parameters of at least one other reporting type (see, for example, the preceding Aspects 1, 2) can be also used for Aspect 3.

In some examples, for Aspect 3, the measurement report (see, for example, arrows a7, a8 of Fig. 8) from the at least one sensing entity E2a, E2b, e.g., to the SePF E4, e.g., after a processing at a sensing receiver side, may include, e.g., for a set of discovered objects, one or more of the following information: a) dimensions of identified object(s) in terms of at least one of a1) width, or a2) depth, or a3) height, or b) an object type (e.g., human, car, bike, vehicle, drone, pedestrian, building, etc...), or c) a material of the identified object(s), or d) a velocity (e.g., characterizing a direction of travel and a speed) of the identified object(s), or e) an acceleration of the identified object(s), or f) location information of the identified object(s), or g) a detection timestamp of the identified object(s), or h) an accuracy (e.g., individually per domain, or, for example, as an ellipsoid in a three-dimensional, 3D, space) of the identified object(s), or i) a detection confidence.

In some examples, for Aspect 3, at least some aspects of the measurement reporting may be similar to measurement reporting for point clouds, see Aspect 1 above, thus, e.g., indicating a list of objects. In some examples, such list of objects may be provided by at least one of: a) grouping multiple points/paths in some way, e.g., with a common ID, and then associating to the common ID specific object information, or b) having a single path/point per object and then associating to the common ID specific object information, or c) directly reporting a list of objects with information similar to the path reporting, then associating to the common ID specific object information.

In the following, an example "Aspect 4" is described, which relates to a UE/base station sensing receiver configuration for reporting type determination according to some examples.

In the previous examples, e.g., related to at least one of the Aspects 1, 2, 3 or any other aspect explained above, e.g., with respect to Fig. 1A et seq., in some examples, the SeMF E3 (Fig. 8) may determine and/or provide the processing and reporting configurations, e.g., using the first information I-1, e.g., at least one of the elements PROC-TECH or REP-TYP, e.g., as may be transmitted to at least one sensing entity E2a, E2b, e.g., in the form of the Sensing Receiver Configuration Request. However, in some examples, at least one of the sensing entities SE, SE' (Fig. 2), E2a, E2b (Fig. 8) may, at least temporarily, e.g., dynamically (e.g., during operation), modify at least one of a) the processing (e.g., of sensing information I-SENS), or b) the reporting (e.g., of the processed sensing information), e.g., according to, e.g., based on, at least one of: A) a processing load, e.g., at a sensing receiver side, or B) an energy consumption, e.g., at the receiver side, or C) a communication load for transmission, e.g., from the receiver side, or D) one or more outputs of actual processing operation of sensing data (e.g., based on at least one output as obtained by the processing of sensing information or sensing data, respectively).

In some examples, at least one of the sensing entities SE, SE' (Fig. 2), E2a, E2b (Fig. 8) may decide to modify at least one of the processing or the reporting based on at least one of: a) priority, or b) at least one measurement.

In some examples, a priority-based scheme for deciding, by the at least one sensing entity SE, SE', E2a, E2b, may comprise the SeMF E3 requesting the at least one sensing entity SE, SE', E2a, E2b to choose the best/highest priority sensing reporting type among a set of given alternatives that is feasible. In some examples, the SeMF E3 may request to preferably report an object map type, then a point could, then a periodogram, wherein the at least one sensing entity may report as object map as much as current processing resources allow to report within a requested time frame, and as point cloud, or even as periodogram, all remaining regions within a requested sensing area. In some examples, the SeMF E3 may request to preferably report as periodogram, otherwise as point cloud, wherein the at least one sensing entity may then report as periodogram as long as there is enough backhaul communication bandwidth available to meet the reporting deadline, and otherwise it may report as point cloud.

In some examples, the SeMF E3 may request the at least one sensing entity to choose a sensing reporting type depending on one or more sensing-specific measured values. For example, the SeMF E3 may request to report with a certain type (e.g., object map, point cloud, periodogram, IQ samples) only if the to be reported measurement values fulfil a given threshold (or lie within a certain range), e.g., if confidence or accuracy is below a given threshold, report that area as periodogram, in addition or alternatively to the requested point cloud type. In some examples, the SeMF E3 may request to report as object map if the detected object type is one of the object type "car" or "pedestrian", and as point cloud otherwise.

In the following an example "Aspect 5" is described, which relates to a UE/base station sensing receiver configuration for a, for example smart, combination of reporting types according to some examples.

In some examples, a processing and/or transmission of combinations and/or composition(s) of two or more sensing data reporting types REP-TYP, and/or combinations of two or more different parameterizations, e.g., of a same sensing reporting type REP-TYP, may be determined, e.g., decided, e.g., per at least one, e.g., each, requested sensing area.

As an example, for a high-altitude sensing area (e.g. 2kms), it may be determined to process and transmit a report of the object map type if an accuracy is above a given threshold, otherwise (e.g., if the accuracy is below the given threshold), it may be determined to transmit a point cloud; and, in some examples, for the ground (e.g., elevation angle downwards), it may be determined to report at least one point cloud, e.g., with a comparatively high compression, e.g., if a confidence is above a given (e.g., further) threshold, otherwise, e.g., in addition, a report with a point cloud may be provided, e.g., with no compression.

In some examples, if the sensing entity detects that a confidence for a presence of one or more detected objects is comparatively low (e.g., due to noisy channel information), then the sensing entity may determine, e.g., decide to process and report periodogram information for the specific area, e.g., instead of or in combination with an object map.

In some examples, the SeMF E3 (Fig. 8) may configure the sensing entity to process and/or transmit more than one sensing data reporting type REP-TYP, e.g., for a same sensing operation request. In some examples, a combination of sensing reporting types can take place based on one or more of the following: a) one or more sensing area-related criteria, or b) one or more thresholds that the sensing entity can check, e.g., about a quality and/or values of the measured and processed sensing data.

In some examples, related to sensing area-related criteria for combining sensing reporting types, for a geographical area "X", a periodogram may be processed and reported according to a defined periodogram configuration, whereas for another geographical area "Y", an object map may be processed and reported, e.g., according to a defined configuration for the object map.

In some examples, the sensing area may be defined using at least one of: a) GPS coordinates, or b) a geographical area or volume, e.g., with respect to at least one reference position or point, or c) shape and/or range (e.g., in meters) information, e.g., with respect to at least one reference point.

In some examples, aspects related to thresholds that the sensing entity, e.g., a sensing receiver, may check about a quality and/or values of the measured and processed sensing data, may comprise at least one of: a) for an object map, a confidence level for at least one of the following: a1) an object's detection accuracy, or a2) an object's location and/or position information accuracy, or a3) an object's velocity accuracy, or a4) and object's acceleration, or a5) an object's dimension and/or size, or a6) an object's type, etc., or b) for at least one target and/or point, e.g., associated with a periodogram, a confidence level of at least one of b1) range, or b2) angle, or b3) Doppler, or b4) radial speed, or b5) power, or c) a probability of a false alarm.

In some examples, the SeMF E3 may provide at least one of the abovementioned parameters and/or thresholds to at least one sensing entity SE, SE', E2a, E2b, e.g., in the form of (or as a part of) the first information I-1, e.g., for at least one request (see, for example, arrows a1, a2 of Fig. 8). In some examples, however, e.g., alternatively or additionally to providing the abovementioned parameters and/or thresholds within the first information I-1, e.g., within a request a1, a2, the SeMF E3 may, e.g., pre-configure at least one sensing entity SE, SE', E2a, E2b, e.g., by providing the respective information prior to transmitting a request.

In the following, further aspects and examples are provided which, in some examples, may be combined with at least one of the abovementioned aspects or examples.

In some examples, one or more sensing measurements may, e.g., be acquired from multiple signal acquisitions, may be aggregated and sent back (e.g., sent to the SePF E4), e.g., after some time. In some examples, however, e.g., as an alternative, at least some sensing measurements may be reported, e.g., immediately and/or repeatedly, e.g., periodically, e.g., continuously, e.g., after each single sensing signal measurement acquisition.

In some examples, as another reporting option, e.g., alternatively or additionally to any of the aforementioned reporting types, one or more I/Q-samples of a measured sensing signal may be reported. In some examples, the one or more I/Q-samples can be in shape of at least one of: a) received and/or transmitted time signal, or b) received and/or transmitted signal, e.g., mapped in an orthogonal frequency division multiplexing, OFDM, grid, e.g., after a Fast Fourier Transform, FFT, processing, e.g., for each OFDM symbol.

In some examples, at least one sensing entity may be configured, e.g., by the SeMF E3, to report, e.g., only, certain pre-determined parts of at least one radio frame (e.g., only DMRS (Demodulation Reference Signal), PRS (Positioning Reference Signal), CSI-RS (Channel State Information Reference Signal), SSB (Synchronization Signal Block), or any other signal, or an excerpt of the radio frame, e.g., decimated and/or cropped, e.g., reporting every n-th I/Q-sample in frequency and m-th I/Q-sample in time, e.g., within a pre-determined time-frequency region), e.g., reporting their position and value, e.g., for each resource element of interest.

As already mentioned above, in some examples, for the configuration, e.g., from the SeMF E3 to the sensing entities, e.g., RAN nodes (e.g., sensing signals receivers), NRPPa signaling may be used or extended based on the principle according to the disclosure, or another NG-AP protocol such as a sensing protocol.

In some examples, e.g., for one or more configuration messages from the SeMF E3 to sensing entities represented by UE (e.g., as sensing signal receiver), LTE Positioning Protocol (LPP) protocols may be used, and/or a sensing protocol, e.g., via Non-access stratum (NAS) messages which may be transparent or not transparent, e.g., to an AMF (Access Mobility Function) or via RRC (Radio Resource Control) messages, e.g., from at least one bases station.

In some examples, for sending data for the reporting from the at least one sensing entity, e.g., to the SePF E4, data and/or user plane signaling or a control plane may be used. In some examples, comparatively large volume data (e.g., I/Q-samples or periodograms) may, e.g., be sent via data/user plane paths. In some examples, a combination of protocols according to a type of the sensing entity's receiver (e.g., UE or base station) and/or the reporting type REP-TYP.

In some examples, Fig. 8, the SePF E4 may be located in a core network, or alternatively associated with, e.g., located at, a Multi-access Edge Computing / Mobile Edge Computing (MEC), e.g., internally or externally to the communication network 1.

Some examples, Fig. 9, relate to a computer program PRG comprising instructions INSTR which, when executed by an apparatus 100, 100', 100-1, 100-1', 100-2, 100-2', cause the apparatus 100, 100', 100-1, 100-1', 100-2, 100-2' to perform the method according to the disclosure.

Some examples, Fig. 9, relate to a computer readable storage medium SM, for example a non-transitory storage medium SM, comprising the computer program PRG according to the disclosure.

Some examples, Fig. 9, relate to an information element IE, e.g., in the form of a, for example computer-implemented, data structure DS, which may comprise at least one of the elements, e.g., information elements, I-1a, ..., I-1j as depicted by Fig. 4.

Some examples, Fig. 9, relate to a data carrier signal DCS carrying and/or characterizing at least one of: a) the computer program PRG according to the disclosure, or b) the data structure DS according to the disclosure.

## Claims

1. An apparatus (100) for a sensing management entity (SME) for a wireless communication network (1), comprising means for determining (200) first information (I-1) characterizing at least one of: a) a processing technique (PROC-TECH) to be applied by at least one sensing entity (SE) to information (I-SENS) associated with sensing (SENS), or b) a type (REP-TYP) of reporting to be used by the at least one sensing entity (SE) for reporting (REP) at least one aspect (ASP-SENS) associated with the sensing (SENS), transmitting (202) the first information (I-1) to the at least one sensing entity (SE), transmitting a request to the at least one sensing entity (SE) to choose a sensing reporting type depending on one or more sensing-specific measured values.

2. The apparatus (100) according to claim 1, wherein the first information (I-1) characterizes at least one of: a) information (I-1a) indicating at least one of the following reporting types: a1) object map, or a2) point cloud, or a3) periodogram, or a4) any combination of at least two of the aforementioned aspects a1), a2), a3, a4), or b) information (I-1b) indicating a clutter removal scheme, or c) information (I-1c) indicating objects to be excluded, or d) information (I-1d) indicating at least one beam identifier for which at least one of d1) the processing technique (PROC-TECH) or d2) the type (REP-TYP) of reporting is to be applied, or e) information (I-1e) indicating a compression configuration to be used for compressing information, or f) information (I-1f) indicating to merge sensing data.

3. The apparatus (100) according to any of the preceding claims, wherein the first information (I-1) characterizes at least one of: a) information (I-1g) indicating a configuration (CFG-1) for data reduction, or b) identification information (I-1h) characterizing at least one of: b1) an identifier of a sensing session, or b2) an identifier of a radio access network, or b3) an identifier of a sensing entity, for example user equipment identifier or cell identifier, or b4) an identifier of a beam, or b5) an identifier of a transmission and/or reception point, TRP, or c) information (I-1i) indicating an angular space configuration associated with the type (REP-TYP) of reporting, or d) information (I-1j) indicating a timing configuration associated with the type (REP-TYP) of reporting.

4. The apparatus (100) according to any of the preceding claims, further comprising means for: transmitting (204) at least a part (I-1') of the first information (I-1) to at least one further entity (SPE).

5. The apparatus (100) according to any of the preceding claims, further comprising means for: receiving (206) a response (RESP) to the first information (1-1), the response (RESP) comprising at least one of: a) an indication (IND-CFG) whether a configuration based on the first information (I-1) has been successful or not, or b) an indication (IND-CAUSE) indicating a cause, for example, in case of no successful configuration.

6. A method for a sensing management entity (SME) for a wireless communication network (1), the method comprising: determining (200) first information (I-1) characterizing at least one of: a) a processing technique (PROC-TECH) to be applied by at least one sensing entity (SE) to information (I-SENS) associated with sensing (SENS), or b) a type (REP-TYP) of reporting to be used by the at least one sensing entity (SE) for reporting (REP) at least one aspect (ASP-SENS) associated with the sensing (SENS), transmitting (202) the first information (I-1) to the at least one sensing entity (SE), transmitting a request to the at least one sensing entity (SE) to choose a sensing reporting type depending on one or more sensing-specific measured values.

7. An apparatus (100-1) for a sensing entity (SE) for a wireless communication network (1), the apparatus (100-1) comprising means for: receiving (250) first information (I-1) characterizing at least one of: a) a processing technique (PROC-TECH) to be applied by the sensing entity (SE) to information (I-SENS) associated with sensing (SENS), or b) a type (REP-TYP) of reporting to be used by the sensing entity (SE) for reporting (REP) at least one aspect (ASP-SENS) associated with the sensing (SENS), and receiving a request to choose a sensing reporting type depending on one or more sensing-specific measured values.

8. The apparatus (100-1) according to claim 7, wherein the first information (I-1) characterizes at least one of: a) information (I-1a) indicating at least one of the following reporting types: a1) object map, or a2) point cloud, or a3) periodogram, or a4) any combination of at least two of the aforementioned aspects a1), a2), a3, a4), or b) information (I-1b) indicating a clutter removal scheme, or c) information (I-1c) indicating objects to be excluded, or d) information (I-1d) indicating at least one beam identifier for which at least one of d1) the processing technique (PROC-TECH) or d2) the type (REP-TYP) of reporting is to be applied, or e) information (I-1e) indicating a compression configuration to be used for compressing information, or f) information (I-1f) indicating to merge sensing data.

9. The apparatus (100-1) according to any of the claims 7 to 8, wherein the first information (I-1) characterizes at least one of: a) information (I-1g) indicating a configuration (CFG-1) for data reduction, or b) identification information (I-1h) characterizing at least one of: b1) an identifier of a sensing session, or b2) an identifier of a radio access network, or b3) an identifier of a sensing entity, for example user equipment identifier or cell identifier, or b4) an identifier of a beam, or b5) an identifier of a transmission and/or reception point, TRP, or c) information (I-i) indicating an angular space configuration associated with the type (REP-TYP) of reporting, or d) information (I-j) indicating a timing configuration associated with the type (REP-TYP) of reporting.

10. The apparatus (100-1) according to any of the claims 7 to 9, further comprising means for performing at least one of: a) configuring (252) a sensing receiver procedure (SENS-RX-PROC) based on the first information (I-1), or b) transmitting (254) a response (RESP) to the first information (I-1), the response (RESP) comprising at least one of: a) an indication (IND-CFG) whether a configuration based on the first information (I-1) has been successful or not, or b) an indication (IND-CAUSE) indicating a cause, for example, in case of no successful configuration.

11. The apparatus (100-1) according to any of the claims 7 to 10, further comprising means for performing at least one of: a) receiving (260) at least one sensing signal, or b) processing (262) at least one sensing signal based on the first information (1-1), or c) preparing (264) at least one sensing data report (SENS-DAT-REP) based on at least one of c1) the processing (262), or c2) the first information (1-1), or d) transmitting (266) the at least one sensing data report (SENS-DAT-REP) to at least one further entity (SPE).

12. The apparatus (100-1) according to any of the claims 7 to 11, further comprising means for performing at least one of: a) determining (268) whether to combine different types of sensing data for a same sensing operation, or b) determining (269) how to perform combining of different types of sensing data.

13. The apparatus (100-1) according to any of the claims 7 to 12, further comprising means for determining (268) whether to combine different types of sensing data for a same sensing operation based on at least one of the following elements: a) location specific criteria/parameters, or b) quality thresholds of processed sensing data e.g., estimated confidence level for the detection of one or more objects, per target/point or in a periodogram measurement values and associated confidence, or c) at least one further criterion that may, e.g., be provided to the sensing entity, e.g., by at least one further entity.

14. A method for a sensing entity (SE) for a wireless communication network (1), comprising: receiving (250) first information (I-1) characterizing at least one of: a) a processing technique (PROC-TECH) to be applied by the sensing entity (SE) to information (I-SENS) associated with sensing (SENS), or b) a type (REP-TYP) of reporting to be used by the sensing entity (SE) for reporting (REP) at least one aspect (ASP-SENS) associated with the sensing (SENS), and receiving a request to choose a sensing reporting type depending on one or more sensing-specific measured values.

15. A computer program (PRG) comprising instructions (INSTR) which, when executed by an apparatus (100; 100-1; 100-2; 100'; 100-1'; 100-2'), cause the apparatus (100; 100-1; 100-2; 100'; 100-1'; 100-2') to perform the method according to any of the claims 7, 14.
